# EUROPÄISCHE PATENTSCHRIFT

(11) **EP 2 750 798 B1**
(45) Veröffentlichungstag und Bekanntmachung des Hinweises auf die Patenterteilung: **05.08.2015**
(21) Anmeldenummer: 12751535.1
(22) Anmeldetag: 31.08.2012
(51) Int. Cl.: B01J 31/18

(54) **KATALYSATOREN FÜR DIE HERSTELLUNG VON CARBONATEN AUS EPOXIDEN UND CO2**
CATALYSTS FOR PRODUCING CARBONATES FROM EPOXIDES AND CO2
CATALYSEURS POUR LA PRODUCTION DE CARBONATES À PARTIR D'ÉPOXYDES ET DE CO2

(30) Priorität: 02.09.2011 EP 11179831
(43) Veröffentlichungstag der Anmeldung: 09.07.2014
(73) Patentinhaber: BASF SE, 67056 Ludwigshafen (DE)
(72) Erfinder: DEGLMANN, Peter, 68163 Mannheim (DE); BRYM, Anna Katharina, 67117 Limburgerhof (DE); RIEGER, Bernhard, 80809 München (DE); LEHENMEIER, Maximilian, 80802 München (DE); KLAUS, Stephan, 80539 München (DE)
(86) Internationale Anmeldenummer: PCT/EP2012/066931
(87) Internationale Veröffentlichungsnummer: WO 2013/030317

(56) Entgegenhaltungen:
- DE-B3-102004 037 201
- PILZ M F ET AL: "Dinuclear Zinc Complexes Based on Parallel beta-Diiminato Binding Sites: Syntheses, Structures, and Properties as CO2/Epoxide Copolymerzation Catalysts", ORGANOMETALLICS, ACS, WASHINGTON, DC, US, Bd. 26, 1. Januar 2007 (2007-01-01), Seiten 3668-3676, XP002532344, ISSN: 0276-7333, DOI: 10.1021/OM070221E [gefunden am 2007-06-14] in der Anmeldung erwähnt
- DAVID R MOORE ET AL: "Mechanism of the alternating copolymerization of epoxides and CO2 using beta-diiminate zinc catalysts: evidence for a bimetallic epoxide enchainment", JOURNAL OF THE AMERICAN CHEMICAL SOCIETY, ACS PUBLICATIONS, US, Bd. 125, Nr. 39, 1. Januar 2003 (2003-01-01), Seiten 11911-11924, XP002663203, ISSN: 0002-7863, DOI: 10.1021/JA030085E [gefunden am 2003-09-03]
- SU YEON LEE ET AL: "Syntheses and Structures of a Macrocyclic [beta]-Diketimine and Its Zinc and Copper Complexes", ORGANOMETALLICS, Bd. 23, Nr. 23, 1. November 2004 (2004-11-01), Seiten 5382-5385, XP055039993, ISSN: 0276-7333, DOI: 10.1021/om049483w in der Anmeldung erwähnt

## Beschreibung

Die vorliegende Erfindung betrifft einen Makrocyclus basierend auf β-Diketiminen, ein Verfahren zur Herstellung des erfindungsgemäßen Makrocyclus, einen neutralen makrocyklischen Dimetallkomplex basierend auf dem erfindungsgemäßen Makrocyclus sowie ein Verfahren zur Herstellung des neutralen makrocyklischen Dimetallkomplexes, die Verwendung des neutralen makrocyklischen Dimetallkomplexes als Polymerisationskatalysator in der Polymerisation von Kohlendioxid mit einem oder mehreren Epoxiden, sowie ein Verfahren zur Herstellung von Polycarbonaten durch Umsetzung von Kohlendioxid mit einem oder mehreren Epoxiden in Anwesenheit des erfindungsgemäßen neutralen makrocyklischen Dimetallkomplexes.

Polycarbonate können durch Copolymerisation von Epoxiden und Kohlendioxid hergestellt werden. Sie sind daher interessant als biologisch erneuerbare Polymere, die ausgehend von nachwachsenden Rohstoffen hergestellt werden. Des Weiteren sind Polycarbonate als biologisch abbaubare Polymere von Interesse für Anwendungen zum Beispiel in der Pharmazie, Landwirtschaft oder als Spezialchemikalien. Insbesondere als Verpackungsmaterialien sind Polycarbonate von Interesse.

Die Umsetzung von Epoxiden mit Kohlendioxid ist im Stand der Technik bekannt. Ohne Einsatz eines Katalysators läuft diese Umsetzung grundsätzlich nicht ab. In der Literatur sind verschiedene Katalysatoren, bzw. Katalysatorsysteme zur Herstellung von Polycarbonaten beschrieben.

In Inoue et al., Makromol. Chem - 1969, 130, 210 ist die alternierende Copolymerisation von Epoxiden mit Kohlendioxid in Anwesenheit einer heterogenen Mischung von Diethylzink und Wasser beschrieben. Dieses Katalysatorsystem ist jedoch sehr wenig aktiv, und das erhaltene Polypropylencarbonat zeigt hohe Dispersitäten und einen irregulären Aufbau.

In US 4,943,677 und US 5,026,676 ist die Herstellung von Poly(alkylencarbonaten) durch Copolymerisation von Kohlendioxid und Epoxiden in Anwesenheit von Zinkpolycarboxylatkatalysatoren beschrieben. Die Katalysatoren werden bevorzugt durch Umsetzung von Zinkoxid und einer Dicarbonsäure, z. B. Glutarsäure oder Adipinsäure, hergestellt.

In Darensbourg et al., Makromolecules 1995, 28, 7577 sind zur alternierenden Copolymerisation von Epoxiden mit CO₂ geeignete Di(phenoxid)-Zink-Komplexe beschrieben, die durch Umsetzung von 2,6-disubstituierten, bzw. 2,4,6-trisubstituierten Phenolen mit Zn[N(SiMe₃)₂]₂ zugänglich sind. Dieses Katalysatorsystem ist jedoch lediglich mäßig aktiv und die erhaltenen Polymere zeigen hohe Polydispersitäten.

In Cheng et al., J. Am. Chem. Soc. 1998, 120, 11018 sind β-Diketiminat-Zink-Single-Site-Katalysatoren offenbart. Diese sind zur alternierenden Copolymerisation von Kohlendioxid und Epoxiden geeignet. Es wird angegeben, dass eine hohe Polymerisationsaktivität erreicht wurde.

Ähnliche β-Diketiminat-Zink-Katalysatoren sind in WO 00/08088 offenbart. Diese Katalysatoren werden ebenfalls zur alternierenden Copolymerisation von Epoxiden und Kohlendioxid eingesetzt und zeigen eine hohe Polymerisationsaktivität.

β-Diketiminat-Zink-Komplexe stellen somit eine der derzeit vielversprechendsten Katalysatorgruppen zur alternierenden Copolymerisation von Epoxiden mit Kohlendioxid dar.

Aufgabe der vorliegenden Erfindung ist es, zur alternierenden Copolymerisation von Epoxiden mit Kohlendioxid geeignete weitere hochaktive Katalysatoren bereitzustellen, die zur Copolymerisation und Terpolymerisation verschiedener Epoxide mit Kohlendioxid geeignet sind und zu Polycarbonaten mit einem geringen Polyetheranteil und einer geringen Polydispersität führen.

Diese Aufgabe wird durch die nachstehend genannten makrocyclischen bimetallischen β-Diketiminat-Zink-Komplexe gelöst.

Verbrückte bis(β-Diketiminat)-Komplexe sind in L. Bourget-Merle et al., J. Organomet Chem. 2004, 689, 4357 und D. V. Vitanova et al., J. Organomet. Chem. 2005, 690, 5182 beschrieben.

In Lee et al, Organometallics 2004, 23, 5382-5385 sind makrozyklische β-Diketimine und deren Zink- und Kupferkomplexe offenbart. Die makrozyklischen β-Diketimine weisen eine aromatische Verbrückung auf.

Lee et al., Inorg. Chem. 2006, 45, 4228-4237 betrifft bimetallische fluorsubstituierte Anilido-Aldimin-Zinkkomplexe zur Copolymerisation von CO₂ und Cyclohexenoxid. Die makrozyklischen Komplexe weisen *eine* aromatische Verbrückung auf.

In Limberg et al., Organometallics 2007, 26, 3668-3676 sind dinukleare Zinkkomplexe beschrieben, basierend auf parallelen · -Diketiminato-Bindungsstellen. Die Komplexe werden als Katalysatoren in der Copolymerisation von CO₂ und Cyclohexenoxid eingesetzt.

Harder et al. betrifft bimetallische Kalzium- und Zinkkomplexe, die verbrückte b-Diketiminat-Liganden aufweisen. Die Katalysatoren werden in der Copolymerisation von CO₂ und Cyclohexenoxid eingesetzt.

Gegenstand der vorliegenden Erfindung sind bimetallische Zink-Komplexe basierend auf einem makrocyclischen Liganden der allgemeinen Formel (I). Diese bimetallischen Zink-Komplexe sind zur Herstellung von Carbonaten aus Epoxiden und Kohlendioxid geeignet, wobei sie eine hohe Aktivität zeigen und zur Herstellung von Polycarbonaten mit einer geringen Polydispersität sowie einer geringen Menge an Polyetherverknüpfungen geeignet sind.

Ein weiterer Gegenstand der vorliegenden Erfindung ist ein Makrocyclus, der die Basis für den erfindungsgemäßen bimetallischen Zink-Komplex bildet.

Die vorliegende Erfindung betrifft somit in einer ersten Ausführungsform einen Makrocyclus der allgemeinen Formel (I) 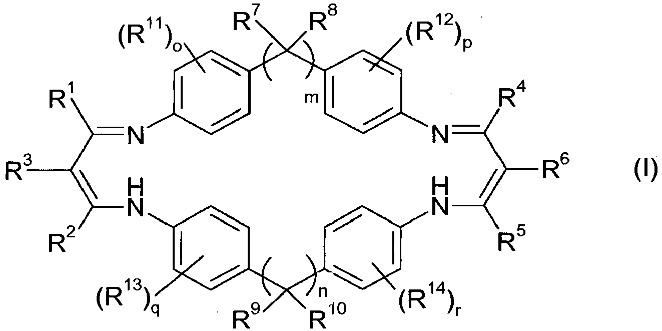 worin bedeuten
- R¹, R², R⁴, R⁵: unabhängig voneinander H, C₁-C₁₀-Alkyl, C₁-C₁₀-Fluoroalkyl, C₁-C₁₀-Alkoxy oder C₆-C₂₀-Aryl; bevorzugt Wasserstoff, C₁-C₄-Alkyl, C₁-C₄-Fluoroalkyl, bevorzugt CF₃, CHF₂, CH₂F; C₂F₅, C₂HF₄ C₂H₂F₃, C₂H₃F₂, C₂H₄F, C₆-C₂₀-Fluoroaryl oder C₁-C₄-Alkoxy; besonders bevorzugt Wasserstoff, Methyl, Ethyl, n-Propyl, iso-Propyl, CF₃, C₂F₅, Methoxy oder Ethoxy; ganz besonders bevorzugt Methyl;
- R³, R⁶: unabhängig voneinander H, C₁-C₁₀-Alkyl, C₆-C₂₀-Aryl, Halogenrest, z. B. F, Cl, Br, I, Pseudohalogenrest, z. B. CN, SCN, Carbonsäurerest, z. B. Rₐ(CO)-O-oder R^{b}-O-(CO)-, worin R^{a} und R^{b} unabhängig voneinander C₁-C₁₀-Alkyl, bevorzugt C₁-C₄-Alkyl, besonders bevorzugt Methyl, Ethyl, n-Propyl oder iso-Propyl bedeuten oder Sulfonylgruppe, z. B. R^{c}-SO₂-, worin R^{c} C₁-C₁₀-Alkyl, bevorzugt C₁-C₄-Alkyl, besonders bevorzugt Methyl, Ethyl, n-Propyl oder iso-Propyl bedeutet,; bevorzugt Wasserstoff, C₁-C₄-Alkyl, Cl, Br, CN, SCN, R^{a} (CO)-O-, R^{b}-O-C(O)-, worin R^{a} und R^{b} unabhängig voneinander Methyl, Ethyl, n-Propyl oder iso-Propyl bedeuten, oder R^{c}-SO₂-, worin R^{c} Methyl, Ethyl, n-Propyl oder iso-Propyl bedeutet; besonders bevorzugt Wasserstoff, Methyl, Ethyl, n-Propyl oder iso-Propyl, CN, Cl, CH₃C(O)-O-, CH₃-O-C(O)- oder CH₃-SO₂; ganz besonders bevorzugt H;
- R⁷, R⁸, R⁹, R¹⁰: unabhängig voneinander H, C₁-C₁₀-Alkyl, C₁-C₁₀-Fluoroalkyl, C₁-C₁₀-Alkoxy oder C₆-C₂₀-Aryl; bevorzugt Wasserstoff, C₁-C₄-Alkyl, C₁-C₄-Fluoroalkyl oder C₁-C₄-Alkoxy; besonders bevorzugt Wasserstoff, Methyl, Ethyl, n-Propyl, iso-Propyl, CF₃₂C₂F₅, Methoxy oder Ethoxy; ganz besonders bevorzugt H;
- R¹¹, R¹², R¹³, R¹⁴: unabhängig voneinander H, C₁-C₁₀-Alkyl, C₁-C₁₀-Fluoroalkyl, C₆-C₂₀-Aryl, Halogen, Pseudohalogen, C₁-C₁₀-Alkoxy oder C₆-C₂₀-Aryloxy,; bevorzugt Wasserstoff, C₁-C₄-Alkyl, C₁-C₄-Fluoroalkyl, Cl, Br, CN oder O-C₁-C₄-Alkyl; besonders bevorzugt Wasserstoff;
- m, n: unabhängig voneinander 1 bis 20, bevorzugt 1 bis 10, besonders bevorzugt 1, 2, 3 oder 4; ganz besonders bevorzugt 1 oder 2; insbesondere ganz besonders bevorzugt 1;
- o, p, q, r: unabhängig voneinander 0, 1, 2, 3 oder 4; bevorzugt 0, 1, 2 oder 3; besonders bevorzugt 0, 1 oder 2; ganz besonders bevorzugt 0 oder 1.

Ein ganz besonders bevorzugter Makrocyclus weist die folgende Formel (la) auf:

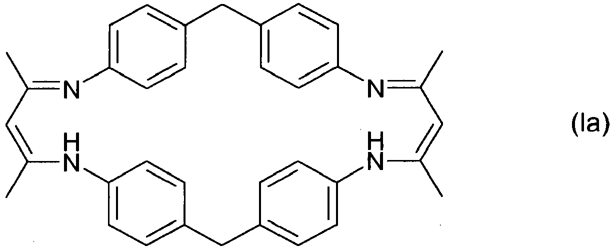

Der erfindungsgemäße Makrocyclus der allgemeinen Formel (I) eignet sich zur Herstellung von bimetallischen Komplexen, wobei die Metallatome in den bimetallischen Komplexen definierte Abstände zueinander aufweisen.

Der Makrocyclus der allgemeinen Formel (I) kann ausgehend von den entsprechenden β-Diketonen der allgemeinen Formel (IIa) bzw. (IIb) hergestellt werden 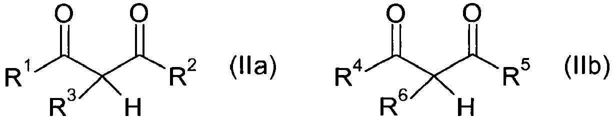 worin bedeuten
- R¹, R² bzw. R⁴, R⁵: unabhängig voneinander H, C₁-C₁₀-Alkyl, C₁-C₁₀-Fluoroalkyl, C₁-C₁₀-Alkoxy oder C₆-C₂₀-Aryl; bevorzugt Wasserstoff, C₁-C₄-Alkyl, C₁-C₄-Fluoroalkyl, bevorzugt CF₃, CHF₂, CH₂F; C₂F₅, C₂HF₄, C₂H₂F₃, C₂H₃F₂, C₂H₄F, C₆-C₂₀-Fluoroaryl oder C₁-C₄-Alkoxy; besonders bevorzugt Wasserstoff, Methyl, Ethyl, n-Propyl oder iso-Propyl, CF₃, C₂F₅, Methoxy oder Ethoxy; ganz besonders bevorzugt Methyl;
- R³ bzw. R⁶: unabhängig voneinander H, C₁-C₁₀-Alkyl, C₆-C₂₀-Aryl, Halogenrest, z. B. F, Cl, Br, I, Pseudohalogenrest, z. B. CN, SCN, Carbonsäurerest, z. B. R^{a} (CO)-O- oder R^{b}-O-(CO)-, worin R^{a} und R^{b} unabhängig voneinander C₁-C₁₀-Alkyl, bevorzugt C₁-C₄-Alkyl, besonders bevorzugt Methyl, Ethyl, n-Propyl oder iso-Propyl bedeuten, oder Sulfonylgruppe, z. B. R^{c}-SO₂-, worin R^{c} C₁-C₁₀-Alkyl, bevorzugt C₁-C₄-Alkyl, besonders bevorzugt Methyl, Ethyl, n-Propyl oder iso-Propyl bedeutet; bevorzugt Wasserstoff, C₁-C₄-Alkyl, Cl, Br, CN, SCN, R^{a} (CO)-O-, R^{b}-O-C(O)-, worin R^{a} und R^{b} unabhängig voneinander Methyl, Ethyl, n-Propyl oder iso-Propyl bedeuten, oder R^{c}-SO₂-, worin R^{c} Methyl, Ethyl, n-Propyl oder iso-Propyl bedeutet; besonders bevorzugt Wasserstoff, Methyl, Ethyl, n-Propyl oder iso-Propyl, CN, Cl, CH₃C(O)-O-, CH₃-O-C(O)- oder CH₃-SO₂; ganz besonders bevorzugt H;

Insbesondere bevorzugt wird sowohl als β-Diketon (IIa) als auch als β-Diketon (IIb) Acetylaceton eingesetzt.

Bevorzugt erfolgt die Herstellung des erfindungsgemäßen Makrocyclus der Formel (I) ausgehend von dem β-Diketon der Formel (IIa) in zwei Stufen.

### 1. Stufe: Umsetzung der β-Diketon-Verbindungen der allgemeinen Formeln (IIa) und (IIb) mit einer Diaminodiphenylverbindung der allgemeinen Formel (IIIa) zu einer Verbindung der allgemeinen Formel (IV)

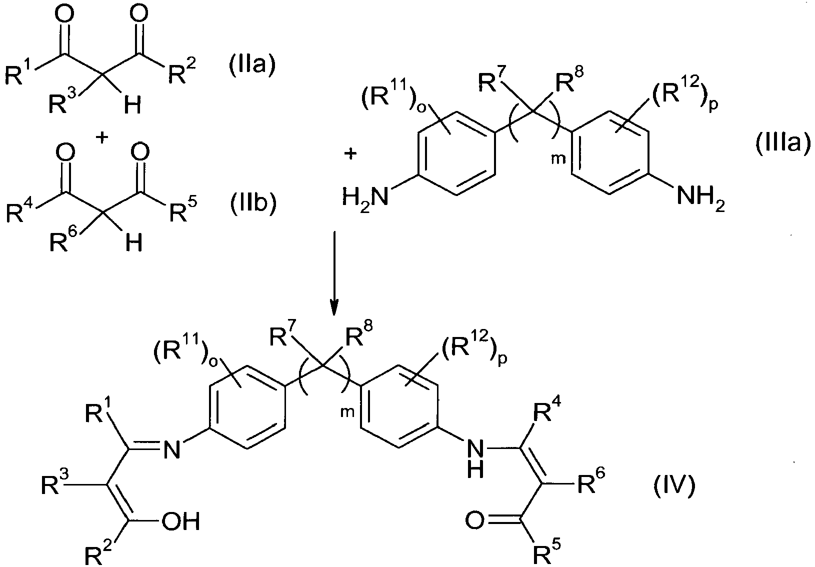

worin bedeuten:
- R⁷, R⁸: unabhängig voneinander H, C₁-C₁₀-Alkyl, C₁-C₁₀-Fluoroalkyl, C₁-C₁₀-Alkoxy oder C₆-C₂₀-Aryl; bevorzugt Wasserstoff, C₁-C₄-Alkyl, C₁-C₄-Fluoroalkyl oder C₁-C₄-Alkoxy; besonders bevorzugt Wasserstoff, Methyl, Ethyl, n-Propyl, iso-Propyl, CF₃₂C₂F₅, Methoxy oder Ethoxy; ganz besonders bevorzugt H;
- R¹¹, R¹²: unabhängig voneinander H, C₁-C₁₀-Alkyl, C₁-C₁₀-Fluoroalkyl, C₆-C₂₀-Aryl, Halogen, Pseudohalogen, C₁-C₁₀-Alkoxy oder C₆-C₂₀-Aryloxy; bevorzugt Wasserstoff, C₁-C₄-Alkyl, C₁-C₄-Fluoroalkyl, Cl, Br, CN oder O-C₁-C₄-Alkyl; besonders bevorzugt Wasserstoff;
- m: unabhängig voneinander 1 bis 20, bevorzugt 1 bis 10, besonders bevorzugt 1, 2, 3 oder 4; ganz besonders bevorzugt 1 oder 2; insbesondere ganz besonders bevorzugt 1;
- o, p: unabhängig voneinander 0, 1, 2, 3 oder 4; bevorzugt 0, 1, 2 oder 3; besonders bevorzugt 0, 1 oder 2; ganz besonders bevorzugt 0 oder 1;
und die Reste R¹, R² und R³ sowie die Reste R⁴, R⁵ und R⁶ die vorstehend bezüglich der Formeln (IIa) und (IIb) genannten Bedeutungen aufweisen.

Die β-Diketo-Verbindungen der Formeln (IIa) und (IIb) können gleich oder verschieden sein, bevorzugt sind sie gleich.

Die Umsetzung der β-Diketo-Verbindungen der Formeln (IIa) und (IIb) mit der Diaminodiphenyl-Verbindung der Formel (IIIa) erfolgt im Allgemeinen in Anwesenheit eines sauren Katalysators. Geeignete saure Katalysatoren sind dem Fachmann bekannt. Beispielsweise sind aromatische und aliphatische Carbonsäuren und Sulfonsäuren geeignet, wie Ameisensäure, Essigsäure, Benzolsulfonsäure oder Toluolsulfonsäure. Ein bevorzugtes Beispiel für einen geeigneten sauren Katalysator ist para-Toluolsulfonsäure (p-TsOH).

Der Katalysator wird im Allgemeinen in einer Menge von 0,01 bis 0,5 mol-Äquivalenten, bevorzugt 0,02 bis 0,1 mol-Äquivalenten, besonders bevorzugt 0,03 bis 0,07 mol-Äquivalenten, bezogen auf die Diaminodiphenylverbindung der allgemeinen Formel (IV) eingesetzt.

Üblicherweise wird die erste Stufe in einem Lösungsmittel durchgeführt, wobei organische Lösungsmittel bevorzugt sind. Besonders bevorzugte organische Lösungsmittel sind aromatische Verbindungen, ganz besonders bevorzugt Toluol oder Benzol.

Das molare Verhältnis der β-Diketo-Verbindungen der allgemeinen Formeln (IIa) und (IIb) (Summe der molaren Anteile der Verbindungen (IIa) und (IIb), wobei das molare Verhältnis der Verbindungen (IIa) und (IIb) im Allgemeinen 0,8 bis 1,2 zu 0,8 bis 1,2, bevorzugt 0,9 bis 1,1 zu 0,9 bis 1,1, besonders bevorzugt 1 zu 1 beträgt) zu der Diaminodiphenyl-Verbindung der allgemeinen Formel (IIIa) beträgt im Allgemeinen 1,8 bis 10 zu 1, bevorzugt 1,9 bis 5 zu 1, besonders bevorzugt 1,9 bis 2,1 zu 1.

Die Umsetzung in Stufe 1 wird im Allgemeinen bei einer Temperatur von 60 bis 160°C, bevorzugt 70 bis 150°C, besonders bevorzugt 80 bis 140 °C durchgeführt. Im Allgemeinen erfolgt die Umsetzung bei Normaldruck.

Die Reaktionsdauer beträgt üblicherweise 1 bis 16 Stunden, bevorzugt 1,5 bis 8 Stunden, besonders bevorzugt 2 bis 3 Stunden.

Nach der Umsetzung wird das in Stufe 1 erhaltene Reaktionsprodukt gemäß dem Fachmann bekannten Verfahren aufgearbeitet und isoliert. Beispielsweise wird das erhaltene Reaktionsgemisch mit einer basischen Lösung, z. B. NaHCO₃-Lösung gewaschen und nach Abtrennung der organischen Phase das Lösungsmittel (aus der organischen Phase), bevorzugt im Vakuum, entfernt. Der erhaltene Rückstand kann anschließend z. B. in Hexan resuspendiert werden, wobei - bevorzugt nach anschließender Filtration - das gewünschte Produkt üblicherweise in Form eines Feststoffs erhalten wird.

### 2. Stufe: Umsetzung des Reaktionsproduktes der ersten Stufe der allgemeinen Formel (IV) mit einer weiteren Diaminodiphenyl-Verbindung der allgemeinen Formel (V), wobei ein Makrocyclus der allgemeinen Formel (I) erhalten wird.

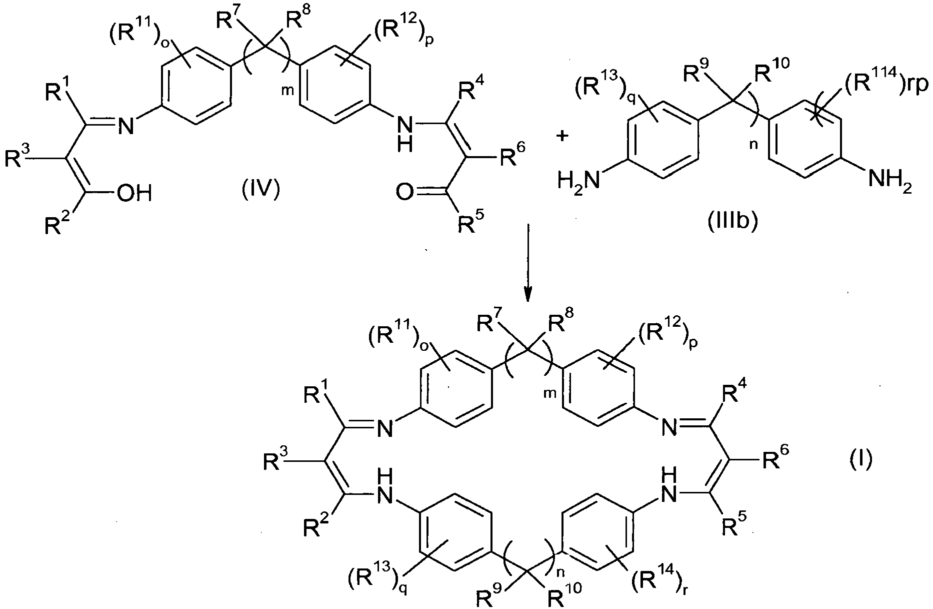

worin die Reste und Indices R¹, R², R⁴, R⁵, R³, R⁶, R⁷, R⁸, R¹¹, R¹², m, o und p die vorstehend bezüglich Stufe 1 genannten Bedeutungen aufweisen
und die Reste R⁹ und R¹⁰ unabhängig voneinander die bezüglich der Reste R⁷ und R⁸ genannten Bedeutungen aufweisen, die Reste R¹³ und R¹⁴ unabhängig voneinander die für die Reste R¹¹ und R¹² genannten Bedeutungen aufweisen, n unabhängig von m die für m genannte Bedeutung aufweist und q und r unabhängig voneinander die für o und p genannten Bedeutungen aufweisen.

Die Umsetzung in der zweiten Stufe (Ringschluss) erfolgt - wie die erste Stufe - in Anwesenheit von Säure. Dabei sind die bezüglich Stufe 1 genannten Säuren grundsätzlich geeignet. Es ist des Weiteren möglich und bevorzugt, eine Diaminodiphenyl-Verbindung der Formel (IIIb) einzusetzen, an die zwei Moleküle HCl koordiniert sind.

Die zweite Stufe des erfindungsgemäßen Verfahrens zur Herstellung des erfindungsgemäßen Makrocyclus wird bevorzugt in einem Lösungsmittel durchgeführt. Geeignete Lösungsmittel sind z. B. Alkohole, insbesondere Ethanol, n-Propanol und iso-Propanol.

Das molare Verhältnis zwischen dem Reaktionsprodukt aus der ersten Stufe der Formel (IV) und der Diaminodiphenyl-Verbindung der allgemeinen Formel (IIIb) beträgt im Allgemeinen 0,7 bis 1,3 zu 1, bevorzugt 0,8 bis 1,2 zu 1, besonders bevorzugt 0,9 bis 1,1 zu 1.

Die zweite Stufe wird bei einer Temperatur von 40 bis 120°C, bevorzugt 50 bis 110°C, besonders bevorzugt 60 bis 100 °C durchgeführt, üblicherweise bei Normaldruck.

Die Reaktionsdauer beträgt 1 bis 48 Stunden, bevorzugt 4 bis 24 Stunden, besonders bevorzugt 8 bis 16 Stunden.

Das erhaltene Reaktionsprodukt wird gemäß dem Fachmann bekannten Verfahren aufgearbeitet. Beispielsweise wird der sich im Allgemeinen bildende Niederschlag in Wasser gelöst und das gewünschte Amin des Diketiminat-Makrocyclusses der Formel (I) durch Zugabe einer basischen Verbindung, z. B. NaHCO₃, freigesetzt. Anschließend wird der gewünschte Makrocyclus der Formel (I) mit einem organischen Lösungsmittel, z. B. Methylenchlorid extrahiert und durch Entfernung des Lösungsmittels isoliert. Zur weiteren Aufreinigung kann der gewünschte Makrocyclus der Formel (I) umkristallisiert werden, z. B. aus Toluol, wobei der gewünschte Makrocyclus der allgemeinen Formel (I) im Allgemeinen in Form eines Feststoffs erhalten wird.

Der Makrocyclus der allgemeinen Formel (I) ist insbesondere zur Herstellung von makrocyclischen Dimetall-Komplexen geeignet. Diese makrocyclischen Dimetall-Komplexe können beispielsweise als Katalysatoren in der Polymerisation von Epoxiden mit Kohlendioxid zur Herstellung von Polycarbonaten eingesetzt werden.

Ein weiterer Gegenstand der vorliegenden Anmeldung ist daher ein neutraler makrocyclischer Dimetall-Komplex der allgemeinen Formel (V) 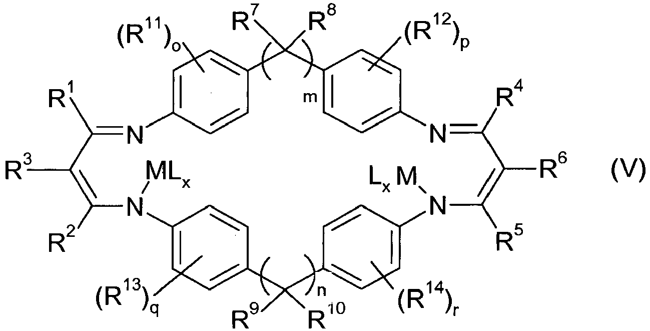 worin bedeuten
- M: Metall der Gruppe 6, 8, 9, 10, 11 oder 12 des Periodensystems der Elemente (IUPAC-Nomenklatur), bevorzugt Cr, Fe, Co, Cu oder Zn, besonders bevorzugt Cu oder Zn, ganz besonders bevorzugt Zn;
- L: einzähniger, einfach negativ geladener Ligand; bevorzugt -N(SiMe₃)₂, -OAc, -OR¹⁵, - SO₂R¹⁵, Halogen, wie F, Cl oder Br, oder Wasserstoff; besonders bevorzugt -N(SiMe₃)₂;
- x: in Abhängigkeit von der Oxidationsstufe und Koordinationszahl des Metalls M 0, 1, 2 oder 3, bevorzugt 0, 1 oder 2; besonders bevorzugt - in dem Fall, wenn die Oxidationsstufe des Metalls II ist, 1;
- R¹⁵: C₁-C₁₀-Alkyl oder C₆-C₂₀-Aryl, bevorzugt C₁-C₄-Alkyl; besonders bevorzugt Methyl, Ethyl, n-Propyl oder iso-Propyl;

und die Reste und Indices R¹, R², R⁴, R⁵, R3, R6, R7, R⁸, R9, R¹⁰, R¹¹, R¹², R¹³, R¹⁴, m, n, o, p, q und r die vorstehend bezüglich des Makrozyklusses der allgemeinen Formel (I) genannten Bedeutungen aufweisen.

Der erfindungsgemäße, neutrale makrocyclische Dimetall-Komplex der allgemeinen Formel (V) eignet sich insbesondere als Katalysator zur Herstellung von Polycarbonaten aus Epoxiden und Kohlendioxid. Der Katalysator ist hochaktiv, und es können Polycarbonate mit enger Molekulargewichtsverteilung und einer geringen Anzahl an Polyether-Verknüpfungen hergestellt werden.

Der erfindungsgemäße, neutrale makrocyclische Dimetall-Komplex der allgemeinen Formel (V) kann durch Umsetzung des erfindungsgemäßen Makrozyklusses der allgemeinen Formel (I) mit einer Metallverbindung der allgemeinen Formel (VI) hergestellt werden

M(Lx)2 (VI)

worin bedeuten
- M: Metall der Gruppe 6, 8, 9, 10, 11 oder 12 des Periodensystems der Elemente (IUPAC-Nomenklatur), bevorzugt Cr, Fe, Co, Cu oder Zn; besonders bevorzugt Cu oder Zn, ganz besonders bevorzugt Zn;
- L: einzähniger, einfach negativ geladener Ligand, bevorzugt -N(SiMe₃)₂, -OAc, -OR¹⁵, -SO₂R¹⁵, Halogen, wie F, Cl oder Br, oder Wasserstoff, besonders bevorzugt -N(SiMe₃)₂;
- x: abhängig von der Oxidationsstufe und Koordinationszahl des Metalls M 0, 1, 2 oder 3; bevorzugt 0, 1 oder 2, besonders bevorzugt, wenn die Oxidationsstufe des Metalls M II ist, 1;
- R¹⁵: C₁-C₁₀-Alkyl oder C₆-C₂₀-Aryl; bevorzugt C₁-C₄-Alkyl; besonders bevorzugt Methyl, Ethyl, n-Propyl oder iso-Proypl.

Die Metallverbindungen der Formel (VI) sind kommerziell erhältlich oder gemäß dem Fachmann bekannten Verfahren herstellbar.

Die Umsetzung des Makrozyklusses der Formel (I) zu dem neutralen, makrocyclischen Dimetall-Komplex der allgemeinen Formel (V) wird im Allgemeinen in einem Lösungsmittel durchgeführt. Bevorzugte Lösungsmittel sind organische Lösungsmittel, besonders bevorzugt aromatische organische Lösungsmittel, z. B. Toluol oder Benzol. Dabei wird der Makrozyklus der allgemeinen Formel (I) zunächst in dem vorstehend genannten Lösungsmittel gelöst.

Anschließend wird die Metallverbindung der Formel (VI) zugegeben. Im Allgemeinen beträgt das molare Verhältnis der Metallverbindung der allgemeinen Formel (VI) zu dem Makrozyklus der allgemeinen Formel (I) 1,7 bis 2,3 zu 1 (molares Verhältnis), bevorzugt 1,8 bis 2,2 zu 1, besonders bevorzugt 1,9 bis 2,1 zu 1.

Die Reaktionsmischung wird im Allgemeinen für einen Zeitraum von 8 bis 24 Stunden, bevorzugt 20 bis 24 Stunden, besonders bevorzugt 22 bis 24 Stunden gerührt.

Die Reaktionstemperatur beträgt im Allgemeinen 50 bis 130°C, bevorzugt 60 bis 120°C, besonders bevorzugt 70 bis 110°C.

Der gewünschte neutrale, makrocyclische Dimetall-Komplex der Formel (V) wird durch Entfernung des Lösungsmittels, bevorzugt im Vakuum, erhalten.

Besonders bevorzugt handelt es sich bei dem neutralen, makrocyclischen Dimetall-Komplex der Formel (V) um einen dinuclearen Zinkkomplex, d.h. M ist in dem Komplex der Formel (V) Zn. Ganz besonders bevorzugt handelt es sich um einen dinuclearen Trimethylsilylamid-Zinkkomplex, d.h. die Gruppe -MLₓ in dem Komplex der Formel (V) bedeutet -ZnN(SiMe₃)₂ (wobei die Gruppe SiMe₃ mit TMS abgekürzt werden kann).

Besonders bevorzugt weist der erfindungsgemäße neutrale, makrocyclische Dimetall-Komplex der Formel (V) die Formel (Va) auf

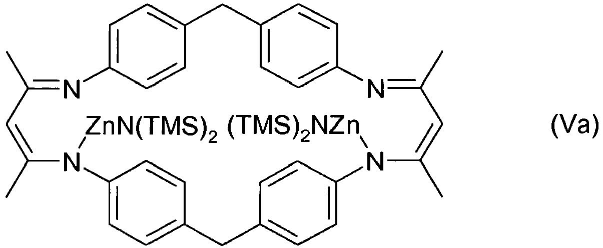

Der erfindungsgemäße neutrale, makrocyclische Dimetall-Komplex der allgemeinen Formel (V) ist als Polymerisationskatalysator geeignet. Insbesondere ist der neutrale, makrocyclische Dimetall-Komplex der allgemeinen Formel (V) als Polymerisationskatalysator in der Polymerisation von Kohlendioxid mit einem oder mehreren Epoxiden geeignet.

Ein weiterer Gegenstand der vorliegenden Anmeldung ist daher die Verwendung des neutralen makrocyclischen Dimetall-Komplexes der allgemeinen Formel (V) als Polymerisationskatalysator in der Polymerisation von Kohlendioxid mit einem oder mehreren Epoxiden. Besonders bevorzugt wird der vorstehend als besonders bevorzugt genannte dinukleare Zinkkatalysator der allgemeinen Formel (Va) als Polymerisationskatalysator in der Polymerisation von Kohlendioxid mit einem oder mehreren Epoxiden eingesetzt.

Geeignete Epoxide sind Ethylenoxid sowie substituierte Epoxide. Hierbei handelt es sich üblicherweise um solche Verbindungen, die unter die folgende allgemeine Formel (VII) fallen:

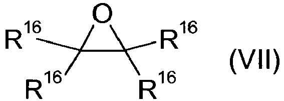

Darin bedeuten die Reste R¹⁶ unabhängig voneinander Wasserstoff, Halogen, Nitrogruppe, Cyanogruppe, Estergruppe, C₁-C₂₀-Alkyl, C₂-C₂₀-Alkenyl, C₃-C₂₀-Cycloalkyl, C₆-C₂₀-Aryl, C₇-C₂₀-Aralkyl, C₁-C₂₀-Alkoxy,
und/oder zwei Reste R¹⁶ können, falls sie sich an verschiedenen C-Atomen der Epoxy-Gruppe befinden, miteinander verbrückt sein und so eine C₃-C₂₀-Cycloalkylen-Gruppe bilden.

Bevorzugte Epoxide sind ausgewählt aus der Gruppe bestehend aus Ethylenoxid, Propylenoxid, Butylenoxid, Cyclopentenoxid, Cyclohexenoxid, Cycloheptenoxid, 2,3-Epoxypropylphenylether, Epichlorhydrin, Epibromhydrin, iso-Butenoxid, Styroloxid, Glycidylether, Glycidylester und Acryloxiden. Besonders bevorzugt sind die Epoxide ausgewählt aus der Gruppe bestehend aus Ethylenoxid, Propylenoxid, Butylenoxid, Cyclopentenoxid, Cyclohexenoxid und iso-Butenoxid. Ganz besonders bevorzugt sind Propylenoxid und Cyclohexenoxid. Es ist möglich, dass in dem Polymerisationsverfahren ein oder mehrere, z. B. zwei oder drei der vorstehend genannten Epoxide, eingesetzt werden, z. B. Propylenoxid allein oder Cyclohexenoxid allein oder Propylenoxid und Cyclohexenoxid. Somit können in dem erfindungsgemäßen Polymerisationsverfahren Polycarbonate in Form von Copolymeren bzw. Terpolymeren erhalten werden.

Die vorstehend genannten Epoxide können nach dem Fachmann bekannten Verfahren hergestellt werden. Beispielsweise können die Epoxide durch Epoxidierung ausgehend von endständigen Olefinen gewonnen werden. Verläuft die Epoxidierung stereo-unspezifisch, ist vorzugsweise eine Racemat-Spaltung vorzunehmen. Es ist jedoch ebenfalls möglich, die Epoxide in Form ihrer Racemate (in beliebigen Verhältnissen) einzusetzen. Methoden zur Racemat-Spaltung, z. B. mittels HPLC-Chromatographie mit chiralem Säulenmaterial, sind dem Fachmann bekannt. Vorteilhafterweise stellt man die Epoxide ausgehend von einem endständigen Olefin über etablierte stereoselektive Verfahren unmittelbar in enantiomerenreiner oder in optisch angereicherter Form dar. Ein geeignetes Verfahren ist z. B. die so genannte Sharpless-Epoxidierung (J. Am. Chem. Soc. 1987 (109), S. 5765 ff. und 8120 ff.).

Des Weiteren gelangt man über ein in Jacobsen et al. (Tetrahedron Lett. 1997, 38, Seiten 773 bis 776; und J. Org. Chem. 1998, 63, Seiten 6776 bis 6777) beschriebenes Verfahren, ausgehend von endständigen Olefinen bzw. racemischen terminalen Epoxiden zu optisch angereicherten Oxiran-Verbindungen. Die Verfahren sind auch großtechnisch einfach durchzuführen (siehe z. B. Acc. Chem. Res. 2000, 33, Seiten 421 bis 431).

Es ist auch möglich, optisch angereicherte Oxiran-Verbindungen dadurch herzustellen, dass man zur enantiomerenreinen Oxiran-Verbindung das Racemat in entsprechender Menge beimengt.

Als Verbindungen mit endständiger Doppelbindung kommen grundsätzlich alle Olefine dieser Verbindungsklasse in Betracht, z. B. Propen, 1-Buten, 1-Penten, 1-Hexen, 1-Hepten oder 1-Octen.

Ein weiterer Gegenstand der vorliegenden Anmeldung ist ein Verfahren zur Herstellung von Polycarbonaten durch Umsetzung von Kohlendioxid mit einem oder mehreren Epoxiden in Anwesenheit eines neutralen, makrocyclischen Dimetall-Komplexes gemäß Formel (V) oder hergestellt gemäß dem erfindungsgemäßen Verfahren zur Herstellung des neutralen makrocyclischen Dimetall-Komplexes der Formel (V).

Geeignete und bevorzugte Epoxide sowie geeignete und bevorzugte neutrale, makrocyclische Dimetall-Komplexe der Formel (V) sind bereits vorstehend genannt.

Besonders bevorzugt werden in den erfindungsgemäßen Verfahren Propylenoxid und/oder Cyclohexenoxid als Epoxide eingesetzt.

Im Allgemeinen wird der neutrale, makrocyclische Dimetall-Komplex der Formel (V), wobei es sich bevorzugt um einen dinuklearen Zinkkatalysator handelt, in einer Menge von 0,0001 bis 0,05 mol-%, bevorzugt 0,0002 bis 0,03 mol-%, besonders bevorzugt 0,0003 bis 0,015 mol-%, bezogen auf die Gesamtmenge der eingesetzten Epoxide, bzw. des eingesetzten Epoxids, eingesetzt. Der Einsatz eines Cokatalysators ist im Allgemeinen nicht erforderlich.

Üblicherweise wird das erfindungsgemäße Verfahren bei einer Temperatur von 18°C bis 160°C, bevorzugt 20 bis 170°C, besonders bevorzugt 22 bis 140°C durchgeführt.

Das erfindungsgemäße Verfahren wird im Allgemeinen bei einem CO₂-Druck von 1 bis 80 bar, bevorzugt 30 bis 60 bar, besonders bevorzugt 5 bis 50 bar durchgeführt.

Die genaue Einstellung von Druck und Temperatur ist dabei zum einen von den bzw. dem zu polymerisierenden Epoxid(en) sowie von der jeweiligen Temperatur bzw. dem jeweiligen Druck abhängig.

Die Reaktionsdauer beträgt im Allgemeinen 0,5 bis 8 h, bevorzugt 0,6 bis 4 h, besonders bevorzugt 0,7 bis 2 h.

Im Allgemeinen wird das erfindungsgemäße Verfahren in Abwesenheit von zusätzlichem Lösungsmittel durchgeführt. Üblicherweise wird das eingesetzte Epoxid bzw. werden die eingesetzten Epoxide als Lösungsmittel verwendet.

Zur Beendigung der Polymerisation wird üblicherweise ein Alkohol, insbesondere Methanol zugegeben. Anschließend wird der erhaltene Niederschlag im Allgemeinen in einem organischen Lösungsmittel, z. B. Methylenchlorid gelöst. Die organische Phase kann dann z. B. mit verdünnter Salzsäure gewaschen werden und anschließend aufkonzentriert werden. Das gewünschte Polymer wird anschließend z. B. in einem Alkohol, z. B. Methanol gefällt.

In einer bevorzugten Ausführungsform des erfindungsgemäßen Verfahrens geht man bei der Reaktionsführung so vor, dass der neutrale, makrocyclische Dimetall-Komplex der Formel (V) in dem oder den zu polymerisierenden Epoxid(en) gelöst wird, der Reaktionsdruck mit Kohlendioxid eingestellt wird und anschließend die gewünschte Reaktionstemperatur eingestellt wird, oder die gewünschte Reaktionstemperatur eingestellt wird und anschließend der Reaktionsdruck mit Kohlendioxid eingestellt wird.

Die nach dem erfindungsgemäßen Verfahren hergestellten Polycarbonate zeichnen sich durch hohe Molekulargewichte aus. Das zahlenmittlere Molekulargewicht Mₙ der nach dem erfindungsgemäßen Verfahren hergestellten Polycarbonate beträgt im Allgemeinen 30 bis 50 kDa. Das zahlenmittlere Molekulargewicht wird mittels Gelpermeationschromatographie (GPC, auch als Size Exclusion Chromatography (SEC) bezeichnet) bestimmt unter Verwendung von Hexafluoroisopropanol (HFiP) als Eluent und Kalibration mit Polymethylmethacrylat (PMMA)-Standards. Dabei kann man beispielsweise wie folgt arbeiten: Detektor: Differentialrefraktometer ERC 7510 von Fa. ERC; Säulen: HFiP Gel Vorsäule und HFiP Gel linear Trennsäule, beide von Fa. Polymer Laboratories; Kalibration mit engverteilten PMMA-Standards mit Molekulargewichten M von 505 bis 2.740.000 der Fa. PSS.

Die nach dem erfindungsgemäßen Verfahren hergestellten Polycarbonate zeichnen sich des Weiteren dadurch aus, dass sie einen geringen Polyether-Anteil aufweisen. Dabei handelt es sich bei dem Polyether-Anteil um den Anteil an Polyether-Verknüpfungen im Polymer. Dieser beträgt im Allgemeinen maximal 50 mol-%, bevorzugt 0,1 bis 50 mol-%, besonders bevorzugt 0,2 bis 30 mol-%, ganz besonders bevorzugt 0,3 bis 10 mol-%, insbesondere ganz besonders bevorzugt 1 bis 8 mol-%.

Ein großer Vorteil der erfindungsgemäßen, neutralen makrocyclischen Dimetall-Komplexe der Formel (V), insbesondere der dinuklearen Zinkkomplexe, ist, dass zur Herstellung von Polycarbonaten aus einem oder mehreren Epoxiden und Kohlendioxid hochaktive Katalysatoren bereitgestellt werden können, die ohne Zusatz von Cokatalysatoren sowohl alicyclische Epoxide, z. B. Propylenoxid, als auch cyclische Epoxide, z. B. Cyclohexenoxid, und Mischungen aus alicyclischen und cyclischen Epoxiden polymerisieren können.

Die mithilfe der erfindungsgemäßen neutralen, makrocyclischen Dimetall-Komplexe der Formel (V) als Katalysatoren erhaltenen Polycarbonate zeichnen sich durch einen geringen Anteil an Polyether-Verknüpfungen sowie hohe Molekulargewichte aus.

Die nachfolgenden Beispiele erläutern die Erfindung zusätzlich.

### Beispiele

### Beispiel 1: Liganden- und Komplexsynthese

### 1. Stufe: Herstellung der Verbindung der Formel (3)

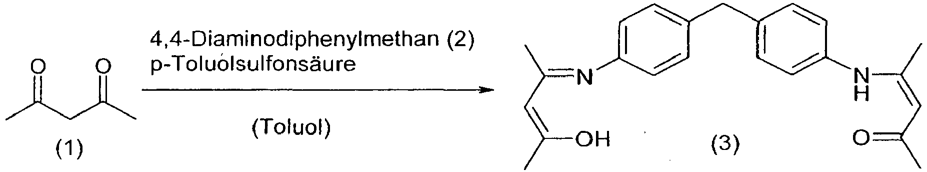

### Synthese der Verbindung (3)

4,4-Diaminodiphenylmethan (2) (5,79 g, 29,21 mmol, 0,5 eq.) wird in Toluol (50,00 mL) gelöst und mit Acetylaceton (1) (6,00 mL, 58,43 mmol, 1,0 eq.) und para-Toluolsulfonsäure (p-TsOH) (0,50 g, 2,92 mmol, 0,05 eq) versetzt und über Nacht (16 Stunden) am Wasserabscheider gekocht. Eine Reaktionsdauer von 2 Stunden ist grundsätzlich ausreichend. Das Reaktionsgemisch wird mit NaHCO₃-Lösung gewaschen. Das Lösungsmittel wird im Vakuum entfernt und der Rückstand in Hexan resuspendiert, nach Filtration wird ein Feststoff (90%) erhalten.

| | Molmasse [g/mol] | Dichte [g/cm³] | Masse [g] | Volu lumen [mL] | Stoffmenge [mmol] | Moläquivalente |
|---|---|---|---|---|---|---|
| Acetylaceton | 100,12 | 0,975 | 5,85 | 6,00 | 58,43 | 1,00 |
| 4,4-Diamino-diphenylmethan | 198,26 | | 5,79 | | 29,21 | 0,50 |
| p-TsOH | 172,2 | | 0,50 | | 2,92 | 0,05 |
| Toluol | | | | 50,0 0 | | |

Analytik
¹H-NMR (CDCl₃, 295.5 K, 300.13 MHz)): · = 12.42 (s, 2H), 7.12 (d, *³J*=8.3 Hz, 4H), 7.01 (d, ³*J*=8.3 Hz, 4H), 5.15 (s, 2H), 3.90 (s, 2H), 2.06 (s, 6H)_{f} 1.95 (s, 6H).

### 2. Stufe: Ringschluss zu der Verbindung der Formel (4)

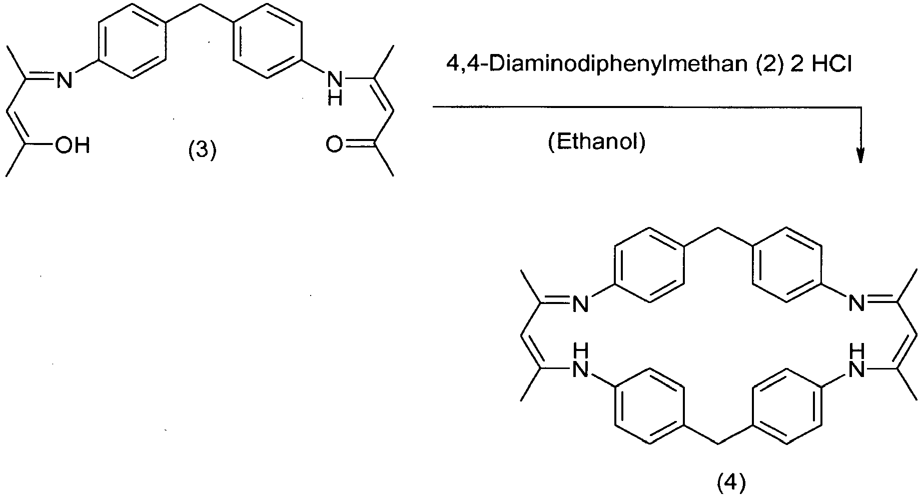

Die Verbindung der Formel (3) (1,05 g, 2,90 mmol, 1,0 eq.) und 4,4-Diaminodiphenylmethan 2 HCl (0,79 g, 2,90 mmol, 1,0 eq.) werden in Ethanol (70,08 mL) gelöst. Anschließend auf 80 °C erhitzt und über Nacht (für 16 Stunden) gerührt. Der gelbe Niederschlag wird in Wasser gelöst und das Amin durch Zugabe von NaHCO₃-Lösung freigesetzt und mit Methylenchlorid extrahiert. Nach Umkristallisation in Toluol wird ein Feststoff (Verbindung (4) (35%) erhalten.

| | Molmasse [g/mol] | Masse [g] | Volumen [mL] | Stoffmenge [mmol] | Moläquivalente |
|---|---|---|---|---|---|
| Verbindung der Formel (3) | 362,46 | 1,05 | | 2,90 | 1,00 |
| 4,4-Diaminodiphenylmethan | 271,19 | 0,79 | | 2,90 | 1,00 |
| Ethanol | | | 70,08 | | |

¹H-NMR (CDCl₃, 298.7 K, 300.13 MHz): · = 13.19 (s, 2H), 6.99 (d, ³J=8.3 Hz, 4H), 6.71 (d, ³J=8.3 Hz, 4H), 4.83 (s, 2H), 3.77 (s, 4H), 2.06 (s, 12H).

### 3. Stufe: Komplexierung mit [Bis(bis(trimethylsilyl)amido)]zink

Verbindung (4) aus Stufe 2 (0.05 g, 0.10 mmol, 1.0 eq.) wird in Toluol (50.0 mL) gelöst, anschließend wird [Bis(bis(trimethylsilyl)amido)]zink (0.075 mL, 0.19 mmol, 2.0 eq.) zugegeben und 24 h bei 90°C gerührt. Die klare Lösung wird im Vakuum getrocknet, und es wird Verbindung (5) als Feststoff (55%) erhalten.

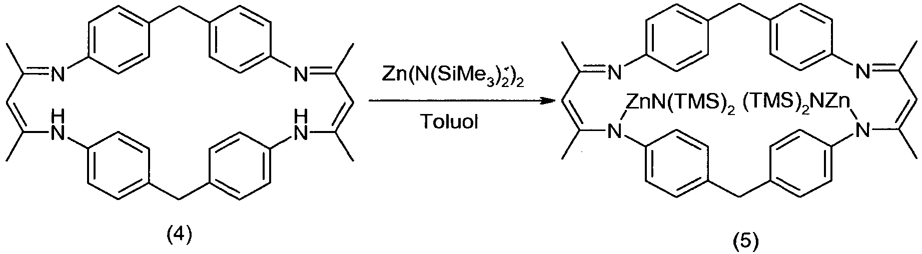

| | Molmasse [g/mol] | Dichte [g/cm³] | Masse [g] | Volumen [mL] | Stoffmenge [mmol] | Moläquivalente |
|---|---|---|---|---|---|---|
| Verbindung der Formel (4) | 524,7 | | 0,05 | | 0,10 | 1,00 |
| Zn(N(SiMe₃)₂)₂ | 386,16 | 0,975 | 0,07 | 0,075 | 0,19 | 2,00 |
| Toluol | | | | 70,08 | | |

1H-NMR (C₆D₆, 298.7 K, 300.13 MHz)): · = 6.82 (m 16H), 4.77 (s 2H), 3.55 (s 4H), 1.87 (s 12H), 0.20 (m 38H).

### Beispiel 2: Polymerisationsversuche

### 2.1 Poly(cyclohexencarbonat)

Der dinukleare Zinkkatalysator aus Beispiel 1 (21 mg, 0,025 mmol, 0,1 mol-%) wird in Cyclohexenoxid (2,50 mL, 24,75 mmol, 1,00 eq.) gelöst. Der Reaktor wird bei 100°C unter Kohlenstoffdioxid (10 bar) gesetzt. Nach 1 h wird die Reaktion durch Zugabe von Methanol (10,0 mL) abgebrochen, und der gebildete Niederschlag wird in CH₂Cl₂ gelöst. Die organische Phase wird mit verdünnter Salzsäure gewaschen und anschließend aufkonzentriert. Danach wird das Polymer in Methanol (300,0 mL) gefällt. Es werden 2,23 g Poly(cyclohexencarbonat) erhalten 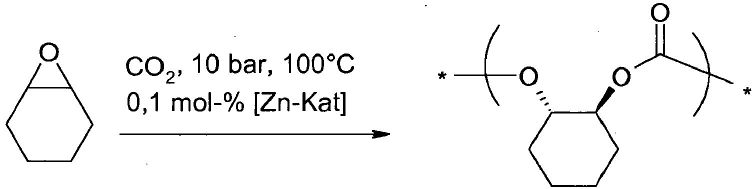 Zn-Kat = Zink-Katalysator (5) aus Beispiel 1

| | Molmasse [g/mol] | Dichte [g/cm³] | Masse [g] | Volumen [mL] | Stoffmenge [mmol] | Moläquivalente |
|---|---|---|---|---|---|---|
| Cyclohexenoxid | 98,14 | 0,972 | 2,43 | 2,50 | 24,75 | 1,00 |
| Zn-Kat¹⁾ | 839,75 | | 0,02 1 | | 0,025 | 0,001 |

| | | | | | | |
|---|---|---|---|---|---|---|
| 1)Zn-Kat = Zink-Katalysator (5) aus Beispiel 1 | | | | | | |

¹H-NMR (CDCl₃, 298.7 K, 300.13 MHz): · = 4.75 (s 2H), 1.25-2.25)m 8H).

### 2.2 Poly(propylencarbonat)

Der dinukleare Zinkkatalysator (5) aus Beispiel 1 (60,0 mg, 0,072 mmol, 0,1 mol%) wird in Propylenoxid (5,00 mL, 71,50 mmol, 1,0 eq.) gelöst. Der Reaktor wird bei 80°C unter Kohlenstoffdioxid (30 bar) gesetzt. Nach 1 h wird die Reaktion durch Zugabe von Methanol (10,0 mL) abgebrochen, und der gebildete Niederschlag wird in CH₂Cl₂ gelöst. Die organische Phase wird mit verdünnter Salzsäure gewaschen und anschließend aufkonzentriert. Danach wird das Polymer in Methanol (300,0 mL) gefällt. Es werden Poly(propylencarbonat) (PPC) und Propylencarbonat (PC) erhalten. 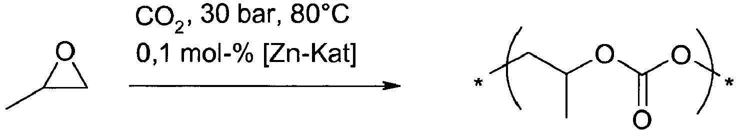 Zn-Kat = Zink-Katalysator (5) aus Beispiel 1

| | Molmasse [g/mol] | Dichte [g/cm³] | Masse [g] | Volumen [mL] | Stoffmenge [mmol] | Moläquivalente |
|---|---|---|---|---|---|---|
| Propylenoxid | 58,4 | 0,830 | 4,15 | 5,00 | 71,5 | 1,00 |
| Zn-Kat¹⁾ | 839,75 | | 0,060 | | 0,072 | 0,001 |

| | | | | | | |
|---|---|---|---|---|---|---|
| 1)Zn-Kat = Zink-Katalysator (5) aus Beispiel 1 | | | | | | |

¹H-NMR (CDCl₃, 298.7 K, 300.13 MHz) (PPC): · = 5.06-4.92 (m 1 H), 4.18 (m 2H), 1.31 (d 3H). (PPC).
¹H-NMR (CDCl₃, 298.7 K, 300.13 MHz) (PC): · = 4.82 (m 1 H), 4.55 (t 1 H), 4.02 (t 1 H), 1.47 (d 3H). (PC).

## Patentansprüche

1. Makrozyklus der allgemeinen Formel (I) 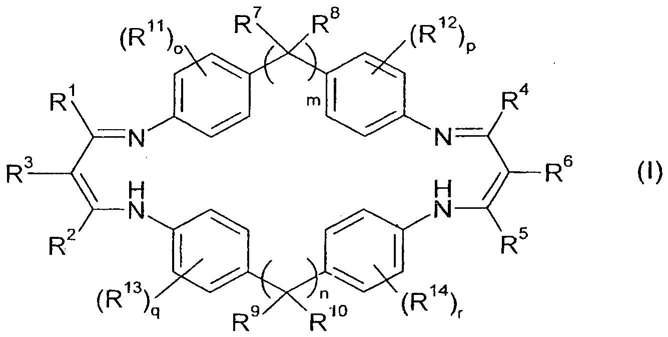 worin bedeuten
R¹, R², R⁴ und R⁵ unabhängig voneinander H, C₁-C₁₀-Alkyl, C₁-C₁₀-Fluoroalkyl, C₆-C₂₀-Fluoroaryl, C₁-C₁₀-Alkoxy oder C₆-C₂₀-Aryl;
R³ und R⁶ unabhängig voneinander H, C₁-C₁₀-Alkyl, C₆-C₂₀-Aryl, Halogenrest, Pseudohalogenrest, Carbonsäureesterrest oder Sulfonylgruppe;
R⁷, R⁸, R⁹ und R¹⁰ unabhängig voneinander H, C₁-C₁₀-Alkyl, C₁-C₁₀-Fluoroalkyl, C₁-C₁₀-Alkoxy oder C₆-C₂₀-Aryl;
R¹¹, R¹², R¹³ und R¹⁴ unabhängig voneinander H, C₁-C₁₀-Alkyl, C₁-C₁₀-Fluoroalkyl, C₆-C₂₀-Aryl, Halogen, Pseudohalogen, C₁-C₁₀-Alkoxy- oder C₆-C₂₀-Aryloxy;
m, n unabhängig voneinander 1 bis 20;
o, p, q und r unabhängig voneinander 0, 1, 2, 3 oder 4.

2. Makrozyklus nach Anspruch 1, **dadurch gekennzeichnet, dass**
R¹, R², R⁴ und R⁵ Methyl;
R³ und R⁶ Wasserstoff;
R⁷, R⁸, R⁹ und R¹⁰ Wasserstoff;
R¹¹, R¹², R¹³ und R¹⁴ Wasserstoff;
m, n 1; und
o, p, q und r 0
bedeuten.

3. Verfahren zur Herstellung eines Makrozyklus der allgemeinen Formel (I) gemäß Anspruch 1 oder 2, umfassend die Schritte:
i) Umsetzung von β-Diketonen der Formeln (IIa) und (IIb) 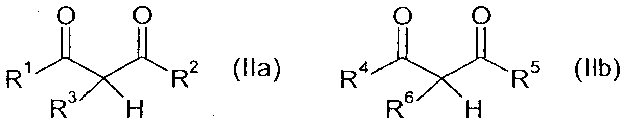 mit einer Diamino-Verbindung der Formel (IIIa) 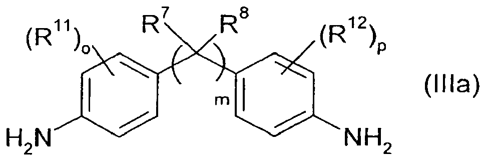 wobei ein Produkt der Formel (IV) erhalten wird 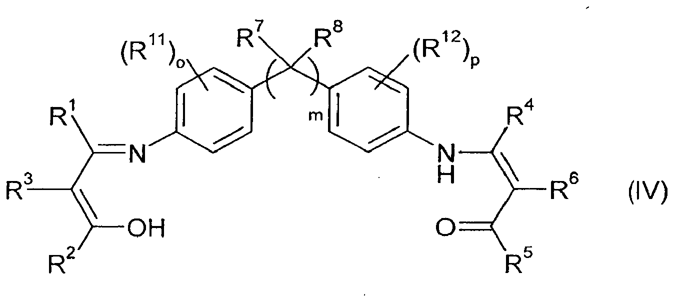
ii) Umsetzung des Produkts der Formel (IV) mit einer Verbindung der Formel (IIIb) 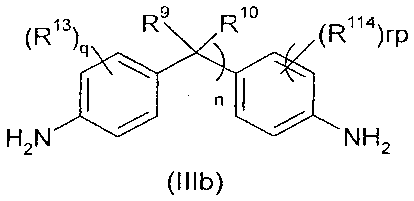 wobei ein Makrozyklus der Formel (I) erhalten wird,
worin bedeuten:
R¹, R², R⁴ und R⁵ unabhängig voneinander H, C₁-C₁₀-Alkyl, C₁-C₁₀-Fluoroalkyl, C₆-C₂₀-Fluoroaryl, C₁-C₁₀-Alkoxy oder C₆-C₂₀-Aryl;
R³, R⁶ unabhängig voneinander H, C₁-C₁₀-Alkyl, Halogenrest, Pseudohalogenrest, Carbonsäureesterrest, Sulfonylgruppe oder C₆-C₂₀-Aryl;
R⁷, R⁸, R9 und R¹⁰ unabhängig voneinander H, C₁-C₁₀-Alkyl, C₁-C₁₀-Fluoroalkyl, C₁-C₁₀-Alkoxy oder C₆-C₂₀Aryl;
R¹¹, R¹², R¹³ und R¹⁴ unabhängig voneinander H, C₁-C₁₀-Alkyl, C₁-C₁₀- Fluoroalkyl, C₆-C₂₀-Aryl, Halogen, Pseudohalogen, C₁-C₁₀-Alkoxy oder C₆-C₂₀-Aryloxy;
m, n unabhängig voneinander 1 bis 20;
o, p, q und r 0, 1, 2, 3 oder 4.

4. Neutraler, makrocyclischer Dimetall-Komplex der allgemeinen Formel (V) 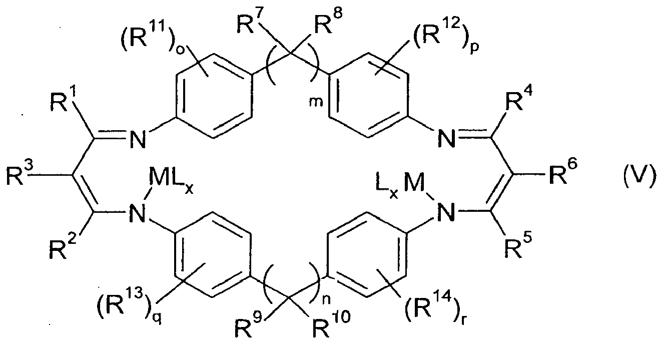 worin bedeuten
worin bedeuten
R¹, R², R⁴ und R⁵ unabhängig voneinander H, C₁-C₁₀-Alkyl, C₁-C₁₀-Fluoroalkyl, C₆-C₂₀-Fluoroaryl, C₁-C₁₀-Alkoxy oder C₆-C₂₀-Aryl;
R³ und R⁶ unabhängig voneinander H, C₁-C₁₀-Alkyl, Halogen rest, Pseudohalogenrest, Carbonsäureesterrest, Sulfonylgruppe oder C₆-C₂₀-Aryl;
R⁷, R⁸, R⁹ und R¹⁰ unabhängig voneinander H, C₁-C₁₀-Alkyl, C₁-C₁₀-Fluoroalkyl, C₁-C₁₀-Alkoxy oder C₆-C₂₀-Aryl;
R¹¹, R¹², R¹³ und R¹⁴ unabhängig voneinander H, C₁-C₁₀-Alkyl, C₁-C₁₀- Fluoro-alkyl, C₆-C₂₀-Aryl, Halogen, Pseudohalogen, C₁-C₁₀-Alkoxy oder C₆-C₂₀-Aryloxy;
m, n unabhängig voneinander 1 bis 20;
o, p, q und r unabhängig voneinander 0, 1, 2, 3 oder 4;
M Metall der Gruppe 6, 8, 9, 10, 11 oder 12 des Periodensystems der Elemente (IUPAC-Nomenklatur);
L einzähniger, einfach negativ geladener Ligand;
x abhängig von der Oxidationsstufe und Koordinationszahl des Metalls M 0, 1, 2 oder 3.

5. Neutraler, makrocyclischer Dimetall-Komplex nach Anspruch 4, **dadurch gekennzeichnet, dass**
M Zn;
L -N(SiMe₃)₂, -OAc, OR¹⁵, -SO₂R¹⁵, Halogen, wie F, Cl oder Br, oder Wasserstoff;
R¹⁵ C₁-C₁₀-Alkyl oder C₆-C₂₀-Aryl; und
x 1
bedeuten.

6. Verfahren zur Herstellung eines neutralen makrocyclischen Dimetall-Komplexes nach Anspruch 4 oder 5 durch Umsetzung des Makrozyklusses der Formel (I) gemäß Anspruch 1 oder 2 mit einer Metallverbindung der allgemeinen Formel (VI)
M(Lₓ)₂ (VI)
worin bedeuten
M Metall der Gruppe 6, 8, 9, 10, 11 oder 12 des Periodensystems der Elemente (IUPAC-Nomenklatur);
L einzähniger, einfach negativ geladener Ligand;
x 0, 1, 2 oder 3.

7. Verwendung eines neutralen makrocyclischen Dimetall-Komplexes der allgemeinen Formel (V) gemäß Anspruch 4 oder 5 in der Polymerisation von Kohlendioxid mit einem oder mehreren Epoxiden.

8. Verwendung nach Anspruch 7, **dadurch gekennzeichnet, dass** die Epoxide ausgewählt sind aus der Gruppe bestehend aus Ethylenoxid, Propylenoxid, Butylenoxid, Cyclopentenoxid, Cyclohexenoxid, Cycloheptenoxid, 2,3-Epoxypropylphenylether, Epichlorhydrin, Epibromhydrin, i-Butenoxid, Styroloxid, Glycidylether, Glycidylester und Acryloxiden.

9. Verwendung nach Anspruch 8, **dadurch gekennzeichnet, dass** Propylenoxid und/oder Cyclohexenoxid als Epoxide eingesetzt werden.

10. Verfahren zur Herstellung von Polycarbonaten durch Umsetzung von Kohlendioxid mit einem oder mehreren Epoxiden in Anwesenheit eines neutralen makrocyclischen Dimetall-Komplexes der Formel (V) nach einem der Ansprüche 4 oder 5 oder hergestellt nach Anspruch 6.

11. Verfahren nach Anspruch 10, **dadurch gekennzeichnet, dass** das oder die Epoxide ausgewählt sind aus der Gruppe bestehend aus Ethylenoxid, Propylenoxid, Butylenoxid, Cyclopentenoxid, Cyclohexenoxid, Cycloheptenoxid, 2,3-Epoxypropylphenylether, Epichlorhydrin, Epibromhydrin, i-Butenoxid, Styroloxid, Glycidylether, Glycidylester und Acryloxiden.

12. Verfahren nach Anspruch 11, **dadurch gekennzeichnet, dass** Propylenoxid und/oder Cyclohexenoxid als Epoxide eingesetzt werden.

## Claims

1. A macrocycle of the general formula (I) 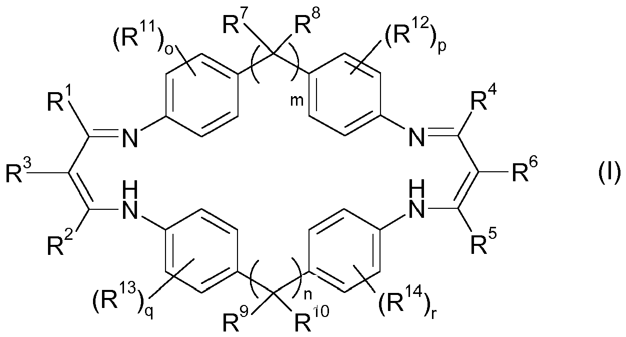 in which
R¹, R², R⁴ and R⁵ are each independently H, C₁-C₁₀-alkyl, C₁-C₁₀-fluoroalkyl, C₆-C₂₀-fluoroaryl, C₁-C₁₀-alkoxy or C₆-C₂₀-aryl;
R³ and R⁶ are each independently H, C₁-C₁₀-alkyl, C₆-C₂₀-aryl, halogen radical, pseudohalogen radical, carboxylic ester radical or sulfonyl group;
R⁷, R⁸, R⁹ and R¹⁰ are each independently H, C₁-C₁₀-alkyl, C₁-C₁₀-fluoroalkyl, C₁-C₁₀-alkoxy or C₆-C₂₀-aryl;
R¹¹, R¹², R¹³ and R¹⁴ are each independently H, C₁-C₁₀-alkyl, C₁-C₁₀-fluoroalkyl, C₆-C₂₀-aryl, halogen, pseudohalogen, C₁-C₁₀-alkoxy or C₆-C₂₀-aryloxy;
m, n are each independently 1 to 20;
o, p, q and r are each independently 0, 1, 2, 3 or 4.

2. A macrocycle according to claim 1, wherein
R¹, R², R⁴ and R⁵ are each methyl;
R³ and R⁶ are each hydrogen;
R⁷, R⁸, R⁹ and R¹⁰ are each hydrogen;
R¹¹, R¹², R¹³ and R¹⁴ are each hydrogen;
m, n are each 1; and
o, p, q and r are each 0.

3. A process for preparing a macrocycle of the general formula (I) according to claim 1 or 2, comprising the steps of:
i) reacting β-diketones of the formulae (IIa) and (IIb) 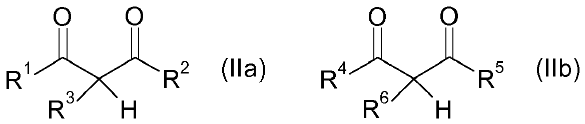 with a diamino compound of the formula (IIIa) 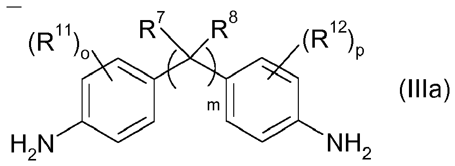 to obtain a product of the formula (IV) 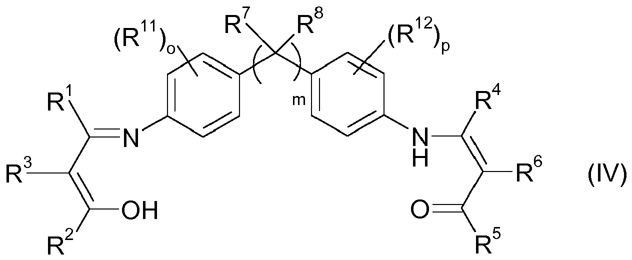
ii) reacting the product of the formula (IV) with a compound of the formula (IIIb) 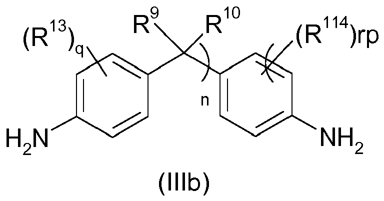 to obtain a macrocycle of the formula (I)
in which:
R¹, R², R⁴ and R⁵ are each independently H, C₁-C₁₀-fluoroalkyl, , C₆-C₂₀-fluoroaryl, C₁-C₁₀-alkoxy or C₆-C₂₀-aryl;
R³, R⁶ are each independently H, C₁-C₁₀-alkyl, halogen radical, pseudohalogen radical, carboxylic ester radical, sulfonyl group or C₆-C₂₀-aryl;
R⁷, R⁸, R⁹ and R¹⁰ are each independently H, C₁-C₁₀-alkyl, C₁-C₁₀-fluoroalkyl, C₁-C₁₀-alkoxy or C₆-C₂₀-aryl;
R¹¹, R¹², R¹³ and R¹⁴ are each independently H, C₁-C₁₀-alkyl, C₁-C₁₀-fluoroalkyl, C₆-C₂₀-aryl, halogen, pseudohalogen, C₁-C₁₀-alkoxy or C₆-C₂₀-aryloxy;
m, n are each independently 1 to 20;
o, p, q and r are each 0, 1, 2, 3 or 4.

4. An uncharged macrocyclic dimetallic complex of the general formula (V) 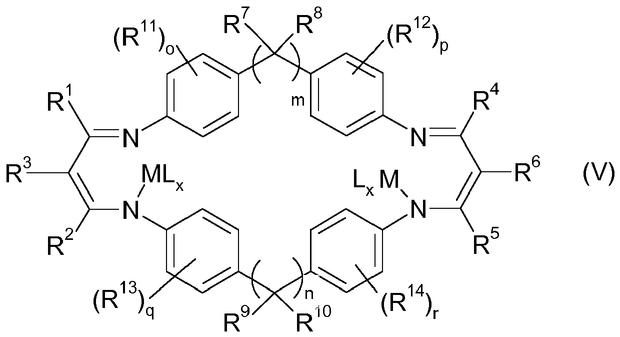 in which
R¹, R², R⁴ and R⁵ are each independently H, C₁-C₁₀-alkyl, C₁-C₁₀-fluoroalkyl, C₆-C₂₀-fluoroaryl, C₁-C₁₀-alkoxy or C₆-C₂₀-aryl;
R³ and R⁶ are each independently H, C₁-C₁₀-alkyl, halogen radical, pseudohalogen radical, carboxylic ester radical, sulfonyl group or C₆-C₂₀-aryl;
R⁷, R⁸, R⁹ and R¹⁰ are each independently H, C₁-C₁₀-alkyl, C₁-C₁₀-fluoroalkyl, C₁-C₁₀-alkoxy or C₆-C₂₀-aryl;
R¹¹, R¹², R¹³ and R¹⁴ are each independently H, C₁-C₁₀-alkyl, C₁-C₁₀-fluoroalkyl, C₆-C₂₀-aryl, halogen, pseudohalogen, C₁-C₁₀-alkoxy- or C₆-C₂₀-aryloxy;
m, n are each independently 1 to 20;
o, p, q and r are each independently 0, 1, 2, 3 or 4;
M is a metal of group 6, 8, 9, 10, 11 or 12 of the periodic table of the elements (IUPAC nomenclature);
L is a monodentate, singly negatively charged ligand;
x, depending on the oxidation state and coordination number of the metal M, is 0, 1, 2 or 3.

5. An uncharged macrocyclic dimetallic complex according to claim 4, wherein
M is Zn;
L is -N(SiMe₃)₂, -OAc, OR¹⁵, -SO₂R¹⁵, halogen, such as F, Cl or Br, or hydrogen;
R¹⁵ is C₁-C₁₀-alkyl or C₆-C₂₀-aryl; and
x is 1.

6. A process for preparing an uncharged macrocyclic dimetallic complex according to claim 4 or 5 by reacting the macrocycle of the formula (I) according to claim 1 or 2 with a metal compound of the general formula (VI)
M(Lₓ)₂ (VI)
in which
M is a metal of group 6, 8, 9, 10, 11 or 12 of the periodic table of the elements (IUPAC nomenclature);
L is a monodentate, singly negatively charged ligand;
x is 0, 1, 2 or 3.

7. The use of an uncharged macrocyclic dimetallic complex of the general formula (V) according to claim 4 or 5 in the polymerization of carbon dioxide with one or more epoxides.

8. The use according to claim 7, wherein the epoxides are selected from the group consisting of ethylene oxide, propylene oxide, butylene oxide, cyclopentene oxide, cyclohexene oxide, cycloheptene oxide, 2,3-epoxypropyl phenyl ether, epichlorohydrin, epibromohydrin, i-butene oxide, styrene oxide, glycidyl ethers, glycidyl esters and acryloyl oxides.

9. The use according to claim 8, wherein propylene oxide and/or cyclohexene oxide is/are used as epoxides.

10. A process for preparing polycarbonates by reacting carbon dioxide with one or more epoxides in the presence of an uncharged macrocyclic dimetallic complex of the formula (V) according to either of claims 4 and 5 or prepared according to claim 6.

11. The process according to claim 10, wherein the epoxide(s) is/are selected from the group consisting of ethylene oxide, propylene oxide, butylene oxide, cyclopentene oxide, cyclohexene oxide, cycloheptene oxide, 2,3-epoxypropyl phenyl ether, epichlorohydrin, epibromohydrin, i-butene oxide, styrene oxide, glycidyl ethers, glycidyl esters and acryloyl oxides.

12. The process according to claim 11, wherein propylene oxide and/or cyclohexene oxide is/are used as epoxides.

## Revendications

1. Macrocycle de formule générale (I) 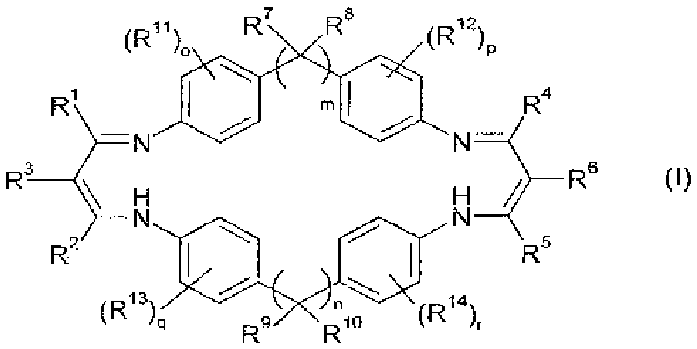 dans laquelle
R¹, R², R⁴ et R⁵ représentent indépendamment les uns des autres H, un groupe alkyle en C₁-C₁₀, fluoroalkyle (C₁-C₁₀), fluoroaryle (C₆-C₂₀), alcoxy en C₁-C₁₀ ou aryle en C₆-C₂₀ ;
R³ et R⁶ représentent indépendamment l'un de l'autre H, un groupe alkyle en C₁-C₁₀, aryle en C₆-C₂₀, un radical halogéno, un radical pseudohalogéno, un radical ester d'acide carboxylique ou un groupe sulfonyle ;
R⁷, R⁸, R⁹ et R¹⁰ représentent indépendamment les uns des autres H, un groupe alkyle en C₁-C₁₀, fluoroalkyle(C₁-C₁₀), alcoxy en C₁-C₁₀ ou aryle en C₆-C₂₀ ;
R¹¹, R¹², R¹³ et R¹⁴ représentent indépendamment les uns des autres H, un groupe alkyle en C₁-C₁₀, fluoroalkyle(C₁-C₁₀), aryle en C₆-C₂₀, halogéno, pseudohalogéno, alcoxy en C₁-C₁₀ ou aryloxy en C₆-C₂₀ ;
m, n valent indépendamment l'un de l'autre de 1 à 20 ;
o, p, q et r valent indépendamment les uns des autres 0, 1, 2, 3 ou 4.

2. Macrocycle selon la revendication 1, **caractérisé en ce que**
R¹, R², R⁴ et R⁵ représentent le groupe méthyle ;
R³ et R⁶ représentent un atome d'hydrogène ;
R⁷, R⁸, R⁹ et R¹⁰ représentent un atome d'hydrogène ;
R¹¹, R¹², R¹³ et R¹⁴ représentent un atome d'hydrogène ;
m, n valent 1 ; et
o, p, q et r valent 0.

3. Procédé pour la préparation d'un macrocycle de formule générale (I) selon la revendication 1 ou 2, comprenant les étapes :
i) mise en réaction de β-dicétones de formules (IIa) et (IIb) 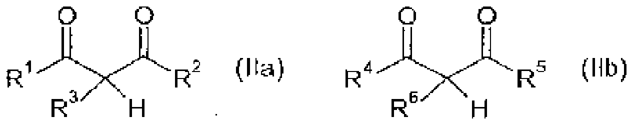 avec un composé diamino de formule (IIIa) 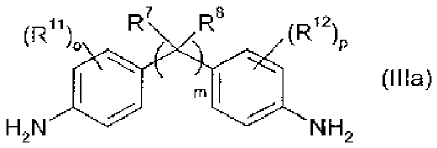 pour l'obtention d'un produit de formule (IV) 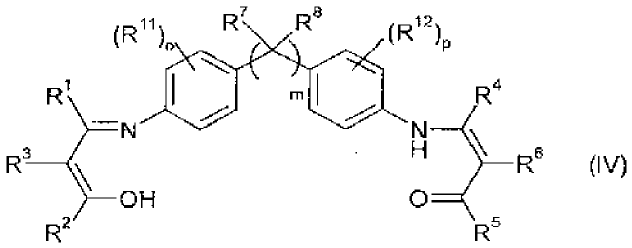 ii) mise en réaction du produit de formule (IV) avec
un composé de formule (IIIb) 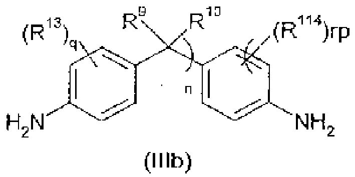 pour l'obtention d'un macrocycle de formule (I) ; où
R¹, R², R⁴ et R⁵ représentent indépendamment les uns des autres H, un groupe alkyle en C₁-C₁₀, fluoroalkyle(C₁-C₁₀), fluoroaryle (C₆-C₂₀), alcoxy en C₁-C₁₀ ou aryle en C₆-C₂₀ ;
R³, R⁶ représentent indépendamment l'un de l'autre H, un groupe alkyle en C₁-C₁₀, un radical halogéno, un radical pseudohalogéno, un radical ester d'acide carboxylique, un groupe sulfonyle ou aryle en C₆-C₂₀ ;
R⁷, R⁸, R⁹ et R¹⁰ représentent indépendamment les uns des autres H, un groupe alkyle en C₁-C₁₀, fluoroalkyle(C₁-C₁₀), alcoxy en C₁-C₁₀ ou aryle en C₆-C₂₀ ;
R¹¹, R¹², R¹³ et R¹⁴ représentent indépendamment les uns des autres H, un groupe alkyle en C₁-C₁₀, fluoroalkyle(C₁-C₁₀), aryle en C₆-C₂₀, halogéno, pseudohalogéno, alcoxy en C₁-C₁₀ ou aryloxy en C₆-C₂₀ ;
m, n valent indépendamment l'un de l'autre de 1 à 20 ;
o, p, q et r valent indépendamment les uns des autres 0, 1, 2, 3 ou 4.

4. Complexe bimétallique macrocyclique neutre de formule générale (V) 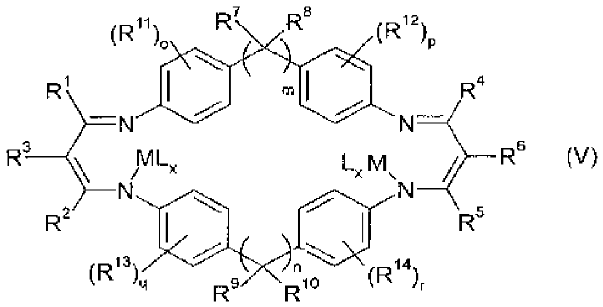 dans laquelle
R¹, R², R⁴ et R⁵ représentent indépendamment les uns des autres H, un groupe alkyle en C₁-C₁₀, fluoroalkyle(C₁-C₁₀), fluoroaryle (C₆-C₂₀), alcoxy en C₁-C₁₀ ou aryle en C₆-C₂₀ ;
R³ et R⁶ représentent indépendamment l'un de l'autre H, un groupe alkyle en C₁-C₁₀, un radical halogéno, un radical pseudohalogéno, un radical ester d'acide carboxylique, un groupe sulfonyle ou aryle en C₆-C₂₀ ;
R⁷, R⁸, R⁹ et R¹⁰ représentent indépendamment les uns des autres H, un groupe alkyle en C₁-C₁₀, fluoroalkyle(C₁-C₁₀), alcoxy en C₁-C₁₀ ou aryle en C₆-C₂₀ ;
R¹¹, R¹², R¹³ et R¹⁴ représentent indépendamment les uns des autres H, un groupe alkyle en C₁-C₁₀, fluoroalkyle(C₁-C₁₀), aryle en C₆-C₂₀, halogéno, pseudohalogéno, alcoxy en C₁-C₁₀ ou aryloxy en C₆-C₂₀ ;
m, n valent indépendamment l'un de l'autre de 1 à 20 ;
o, p, q et r valent indépendamment les uns des autres 0, 1, 2, 3 ou 4 ;
M représente un métal du groupe 6, 8, 9, 10, 11 ou 12 du système périodique des éléments (nomenclature de l'IUPAC) ;
L représente un ligand monodenté, à une seule charge négative ;
x représente, en fonction du degré d'oxydation et de l'indice de coordination du métal M, 0, 1, 2 ou 3.

5. Complexe bimétallique macrocyclique neutre selon la revendication 4, **caractérisé en ce que**
M représente Zn ;
L représente -N(SiMe₃)₂, -OAc, OR¹⁵, -SO₂R¹⁵, un atome d'halogène, tel que F, Cl ou Br, ou un atome d'hydrogène ;
R¹⁵ représente un groupe alkyle en C₁-C₁₀ ou aryle en C₆-C₂₀ ; et
x représente 1.

6. Procédé pour la préparation d'un complexe bimétallique macrocyclique neutre selon la revendication 4 ou 5, par mise en réaction du macrocycle de formule (I) selon la revendication 1 ou 2 avec un composé métallique de formule générale (VI)
M(Lₓ)₂ (VI)
dans laquelle
M représente un métal du groupe 6, 8, 9, 10, 11 ou 12 du système périodique des éléments (nomenclature de l'IUPAC) ;
L représente un ligand monodenté, à une seule charge négative ;
x représente 0, 1, 2 ou 3.

7. Utilisation d'un complexe dimétallique macrocyclique neutre de formule générale (V) selon la revendication 4 ou 5 dans la polymérisation de dioxyde de carbone avec un ou plusieurs époxydes.

8. Utilisation selon la revendication 7, **caractérisée en ce que** les époxydes sont choisis dans le groupe constitué par l'oxyde d'éthylène, l'oxyde de propylène, l'oxyde de butylène, l'oxyde de cyclopentène, l'oxyde de cyclohexène, l'oxyde de cycloheptène, l'éther 2,3-époxypropylphénylique, l'épichlorhydrine, l'épibromhydrine, l'oxyde d'isobutène, l'oxyde de styrène, l'éther glycidylique, des esters de glycidyle et des oxydes d'acroyle.

9. Utilisation selon la revendication 8, **caractérisée en ce qu'**on utilise comme époxydes l'oxyde de propylène et/ou l'oxyde de cyclohexène.

10. Procédé pour la préparation de polycarbonates par mise en réaction de dioxyde de carbone avec un ou plusieurs époxydes en présence d'un complexe bimétallique macrocyclique neutre de formule (V) selon l'une quelconque des revendications 4 et 5 ou préparé selon la revendication 6.

11. Procédé selon la revendication 10, **caractérisé en ce que** l'époxyde ou les époxydes sont choisis dans le groupe constitué par l'oxyde d'éthylène, l'oxyde de propylène, l'oxyde de butylène, l'oxyde de cyclopentène, l'oxyde de cyclohexène, l'oxyde de cycloheptène, l'éther 2,3-époxypropylphénylique, l'épichlorhydrine, l'épibromhydrine, l'oxyde d'isobutène, l'oxyde de styrène, l'éther glycidylique, des esters de glycidyle et des oxydes d'acroyle.

12. Procédé selon la revendication 11, **caractérisé en ce qu'**on utilise comme époxydes l'oxyde de propylène et/ou l'oxyde de cyclohexène.
